# FASCICULE DE BREVET EUROPEEN

(11) **EP 3 221 021 B1**
(45) Date de publication et mention de la délivrance du brevet: **23.10.2019**
(21) Numéro de dépôt: 15821015.3
(22) Date de dépôt: 20.11.2015
(51) Int. Cl.: A63J 1/00, A47B 47/04, A63H 33/04, E04B 1/343, E04B 2/70, E04B 5/02, E04B 5/08, E04C 2/38, F16B 12/46, A47B 47/00

(54) **ENSEMBLE DE MODULES D'UNE CHARPENTE**
ANORDNUNG VON MODULEN FÜR EINE STRUKTUR
ASSEMBLY OF MODULES FOR A STRUCTURE

(30) Priorité: 21.11.2014 BE 201405082
(43) Date de publication de la demande: 27.09.2017
(73) Titulaire: MODS S.A., 1070 Anderlecht (BE)
(72) Inventeur: DE VISSCHER, Julien, 1070 Anderlecht (BE)
(74) Mandataire: Quintelier, Claude
(86) Numéro de dépôt international: PCT/BE2015/000065
(87) Numéro de publication internationale: WO 2016/077892

(56) Documents cités:
- WO-A2-2004/083565
- AU-B2- 547 147
- CN-U- 201 586 393
- CZ-A3- 9 100 826
- GB-A- 2 444 495
- GB-A- 2 495 895
- GB-A- 191 214 974
- US-A1- 2014 283 459

## Description

La présente invention concerne un ensemble de modules d'une charpente, chaque module comprenant au moins trois traverses reliées entre elles de façon à former un sous-ensemble de la charpente, chaque traverse comprenant un premier et un deuxième flanc formant un angle entre eux, ledit ensemble comportant un jeu d'éléments de fixation agencés pour relier les modules entre eux, chaque module comprenant également au moins deux mouchoirs chacun placé sur deux traverses adjacentes à hauteur d'une jonction entre ces deux traverses adjacentes, chaque traverse étant pourvue d'au moins une première et une deuxième perforation situées sur le premier flanc et disposées respectivement au voisinage d'une première et d'une deuxième extrémité de la traverse, lesdits mouchoirs étant chaque fois pourvus d'une troisième perforation.

Un tel ensemble est connu du brevet Australien AU 547147 et est par exemple utilisé pour des podiums. L'ensemble sert de support sur lequel on vient alors poser une finition, comme par exemple une planche qui constitue alors le plancher du podium. Les éléments de fixation sont agencés pour le relier les modules entre eux. Etant entendu que la charpente connue doit être pliable afin de faciliter son transport, le jeu des éléments de fixation est formé par des charnières placées sur le premier flanc de la traverse. Afin de renforcer le module, des mouchoirs, qui sont également placés sur le premier flanc de la traverse, sont prévus.

Un désavantage de l'ensemble de module d'une charpente connu est qu'il n'est modulaire qu'une seule direction. En effet les charnières, qui forment les éléments de fixation, sont placées en surface du module, ce qui empêche de joindre directement à cette surface un module adjacent. L'usage de charnières étant imposé par la nécessite de rendre l'ensemble pliant limite donc considérablement la modularité de l'ensemble et ne le rend approprié que pour un nombre limité de constructions.

L'invention a pour but de réaliser un ensemble de modules d'une charpente modulaire qui peut être utilisé pour un grand nombre d'applications.

A cette fin, un ensemble de modules d'une charpente suivant l'invention est caractérisé en ce que les mouchoirs s'étendent sensiblement en parallèle au deuxième flanc des traverses, la troisième perforation étant orientée selon une direction qui s'étend à travers le deuxième flanc, un premier des éléments de fixation dudit jeu étant logé dans les premières perforations et un deuxième des éléments de fixation dudit jeu étant logé dans les deuxièmes perforations de deux modules adjacents lorsqu'ils sont assemblés avec les premières faces d'une des traverses de chacun des deux modules côte à côte, lesquels éléments de fixation sont agencés pour permettre d'établir la liaison entre les deux modules adjacents lorsque cette liaison est établie entre eux. En utilisant des modules où la liaison entre les modules se fait lors de l'assemblage des modules adjacents, l'ensemble offre une plus grande flexibilité d'usage et donc une plus grande modularité tors du montage. Les premières et deuxièmes perforations servant à y loger des premiers et deuxième éléments de fixation dudit jeu, ces derniers ne forment pas d'obstacle lorsque les modules sont liés entre eux.

Une première forme de réalisation d'un ensemble de modules d'une charpente suivant l'invention est caractérisé en ce que la troisième perforation est positionnée de telle façon à permettre une liaison par l'intermédiaire d'un troisième des éléments de fixation dudit jeu avec une des premières ou deuxièmes perforations d'un des modules de l'ensemble disposé contre le mouchoir où la troisième perforation est appliquée, le troisième élément de fixation étant logé dans cette troisième perforation et la première ou deuxième perforation lorsque les modules sont assemblés. Puisque les mouchoirs et leurs troisièmes perforations sont montés sur le deuxième flanc de la traverse, ils se trouvent dans un plan différent que celui où se trouvent les premières et deuxièmes perforations, qui sont disposées sur le premier flanc. Ainsi te mouchoir permet, grâce à sa troisième perforation, la juxtaposition d'un module adjacent, ce qui contribue également à la modularité de la charpente. En effet comme la troisième perforation se trouve dans le mouchoir elle peut être utilisée pour y attacher un autre module à l'aide du troisième des éléments de fixation. Il est donc possible de relier des modules tant côte à côte que sous un angle entre eux.

Une deuxième forme de réalisation d'un ensemble de modules d'une charpente suivant l'invention est caractérisée en ce que la troisième perforation est disposée sur un croissement d'un premier et d'un deuxième plan s'étendant respectivement à travers la première perforation d'une première desdites deux traverses adjacentes et à travers la deuxième perforation d'une deuxième desdites deux traverses adjacentes, le premier et deuxième plans étant sensiblement perpendiculaire entre eux. Ainsi on veille à ce qu'un troisième des éléments de fixation introduit dans la troisième perforation puisse s'engager dans une première ou deuxième perforation d'un module placé contre le mouchoir où est situé la troisième perforation et permettre ainsi un alignement avec la traverse de ce module où la première ou deuxième perforation est située.

Une troisième forme de réalisation d'un ensemble suivant l'invention est caractérisée en ce que chaque traverse est pourvue sur son premier flanc d'au moins une quatrième et d'une cinquième perforations disposées respectivement au voisinage de la première et de la deuxième extrémités de la traverse et s'étendant dans un premier et un deuxième plan s'étendant sensiblement perpendiculaire à travers la première et la deuxième perforation. Ceci permet une plus grande rigidité d'assemblage de la charpente.

Une quatrième forme de réalisation d'un ensemble suivant l'invention est caractérisée en ce qu'au moins deux des au moins trois traverses sont chacune formées d'au moins deux segments reliés entre eux par un organe de liaison agencé pour permettre un déplacement des segments l'un par rapport à l'autre et permettant une extension de la traverse. L'organe de liaison permet d'étendre la longueur de la traverse et ainsi de plus facilement ajuster l'ensemble de modules d'une charpente aux dimensions de l'endroit où elle doit être appliquée.

Une cinquième forme de réalisation d'un ensemble suivant l'invention est caractérisée en ce qu'il comporte au moins une plaquette d'attache agencée pour être fixée à un mouchoir et pour s'étendre du côté opposé auquel le mouchoir est appliqué. La plaquette permet d'y accrocher plus facilement la finition et également de plus facilement enlever la finition.

De préférence la plaquette d'attache comporte une onzième perforation disposée de telle façon à être alignée à la troisième perforation lorsque la plaquette d'attache est placée sur le module. Ceci facilite la fixation de la finition car l'alignement des trous permet de facilement y insérer un élément de fixation.

De préférence la plaquette d'attache comporte sur deux de ses côtés un profil en escalier. Ceci permet d'offrir un accès aux éléments de fixation introduits dans les premières et deuxièmes perforations.

L'invention sera maintenant décrite à l'aide des dessins dans lesquels :
la figure 1 montre une vue d'ensemble d'une première forme de réalisation d'un module de l'ensemble suivant l'invention ;
la figure 2 illustre la disposition des première, deuxième et troisième perforations ;
la figure 3 montre une vue d'ensemble d'une deuxième forme de réalisation d'un module d'un ensemble suivant l'invention ;
la figure 4 montre la deuxième forme de réalisation d'un module de l'ensemble sous sa forme étirée ;
la figure 5 montre la deuxième forme de réalisation du module de l'ensemble avec des accessoires qui y sont attachés ;
la figure 6 montre trois modules de l'ensemble assemblés entre eux.
la figure 7 montre une vue d'ensemble d'un module pourvu d'une plaquette d'attache ;
la figure 8 montre un dispositif d'assemblage des modules ; et
la figure 9 montre une autre forme de réalisation d'un module suivant l'invention.

Dans les dessins une même référence a été attribuée à un même élément ou à un élément analogue.

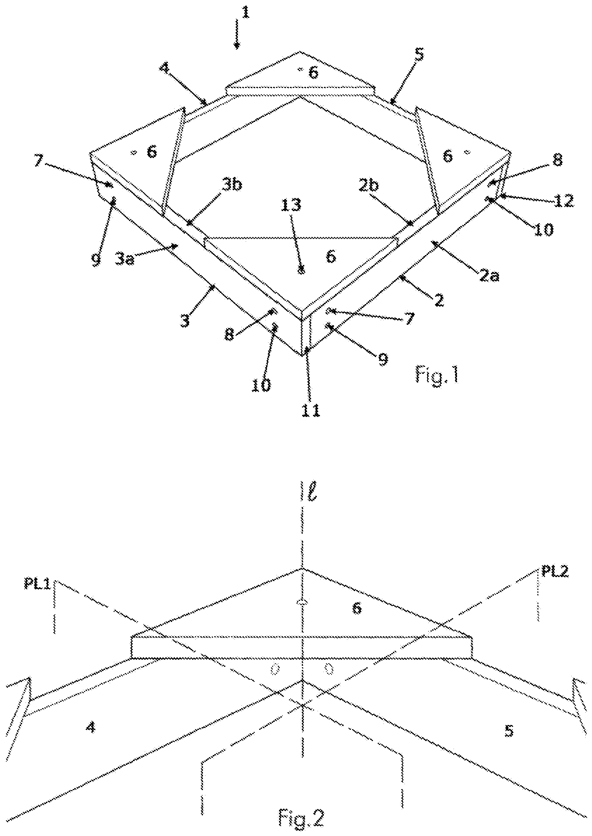

La figure 1 montre une vue d'ensemble d'une première forme de réalisation d'un module 1 de l'ensemble de modules d'une charpente suivant l'invention. Chaque module comprend quatre traverses 2, 3, 4 et 5 reliées entre elles de façon à former un sous-ensemble de la charpente. Bien entendu le module pourrait ne comporter que trois traverses au lieu de quatre, ou il pourrait même comporter plus de quatre traverses. Il est toutefois nécessaire que les traverses soient reliées au moins deux à deux entres elles pour donner une rigidité au module. Pour des raisons de clarté dans le reste de la description on se limitera à un module ayant quatre traverses. Chaque traverse comprend un premier 2a, 3a et un deuxième flanc 2b, 3b flanc formant un angle entre eux. Cet angle est de préférence de 90°, mais peut avoir n'importe quelle valeur située entre 60° et 120°.

Le module comprend au moins deux mouchoirs 6 placés chacun sur deux traverses adjacentes à hauteur d'une jonction entre ces deux traverses. Ceci a pour conséquence que les mouchoirs se trouvent chaque fois à hauteur d'un coin du module. Ils sont de préférence alignés aux traverses. Les mouchoirs sont de préférence superposés aux traverses et s'étendent sensiblement en parallèle aux deuxième flancs 2b, 3b des traverses sur lesquels ils sont montés. Comme le montre la figure 1, les mouchoirs 6 sont superposés aux traverses 2, 3, 4 et 5 afin de ne pas gêner des éléments de fixation. Les mouchoirs ont de préférence une épaisseur de 18 mm et les traverses ont de préférence une épaisseur d'également 18 mm.

Chaque traverse étant pourvue d'au moins une première 7 et d'une deuxième 8 perforation disposée respectivement au voisinage d'une première 11 et d'une deuxième 12 extrémité de la traverse. Les premières et deuxièmes perforations sont situées sur les premiers flancs 2a, 3a des traverses. De préférence, chaque traverse est pourvue d'au moins une quatrième 9 et d'une cinquième 10 perforation placées respectivement au voisinage de la première 11 et de la deuxième 12 extrémités de la traverse. Les quatrièmes et cinquièmes perforations sont de préférence similaires aux premières et deuxièmes perforations et sont également situées sur les premiers flancs 2a, 3a des traverses. Comme illustré à la figure 1 les quatrième et cinquième perforations s'étendant respectivement à une distance des premières et deuxièmes perforations et dans un premier PL1 et un deuxième PL2 plan s'étendant sensiblement perpendiculairement à travers la première et la deuxième perforations.

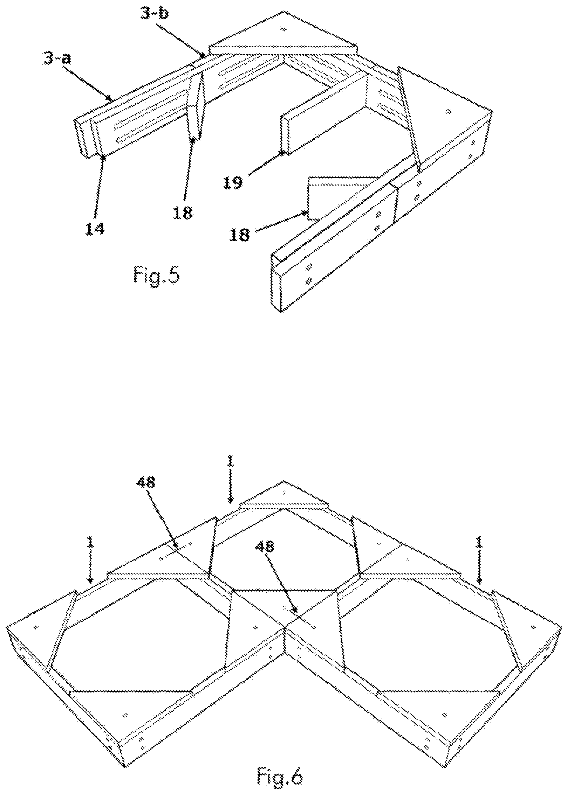

Les perforations servent à y introduire et y loger des éléments de fixation, comme par exemple des vis et des boulons ou des goupilles. Ces éléments de fixation 43 font partie d'un jeu d'éléments de fixation qui permettent de relier entre eux des modules adjacents, comme illustré en pointillé 48 à la figure 6. Les perforations sont soit formés par des trous borgnes dans le premier flanc de la traverse, soit elles traversent de façon rectiligne la traverse à partir du premier flanc pour aboutir de l'autre côté la traverse.

Ainsi, pour construire une charpente avec l'ensemble des modules suivant l'invention et où les modules sont alignés dans un même plan on prendra chaque fois deux modules 1 et on placera le premier flanc d'une traverse de l'un module contre le premier flanc d'une traverse de l'autre module de telle façon à ce que ces premiers flancs soient côte à côte. On introduit dans les premières et deuxièmes perforations 7 et 8 d'un premier des deux modules à relier entre eux chaque fois un premier respectivement un deuxième de l'élément de fixation de telle façon à ce qu'ils soient logés dans les perforations du module concerné. Il suffira alors de réunir les deux modules en les rapprochant côte à côte l'un de l'autre et en faisant engager les éléments de fixation appliqués dans le premier module dans les premières et deuxièmes perforations de l'autre des deux modules. La liaison entre les deux modules est terminée lorsque les premiers et deuxièmes éléments de fixation sont engagés dans les premières et deuxièmes perforations. Au cas où les modules sont pourvus de quatrièmes et cinquièmes perforations 9 et 10, bien entendu une opération similaire pourra se faire pour ces perforations-là. En fonction de la taille de la charpente à construire on placera d'avantage de modules côte à côte en appliquant chaque fois la même séquence de montage que celle qui vient d'être décrite. Les modules peuvent être juxtaposés tant dans une direction horizontale que verticale, de telle façon à ce que la charpente soit formée par une matrice de modules.

Le fait que les éléments de fixations sont logés dans les premières, deuxièmes, et le cas échéant également dans les quatrièmes et cinquième perforations, a pour conséquence que leur présence ne perturbe pas la juxtaposition des modules, qui peuvent ainsi être intimement reliés entre eux sans qu'il y ait une lumière entre eux. En effet à hauteur de la liaison entre deux modules juxtaposés l'élément de fixation ne fait que traverser cette liaison.

Les mouchoirs sont chaque fois pourvus d'une troisième perforation 13, qui, comme illustré à la figure 2, est de préférence disposée sur un croissement I d'un premier plan PL1 et d'un deuxième plan PL2 s'étendant respectivement à travers la première perforation 7 d'une première 4 desdites deux traverses adjacentes et à travers la deuxième perforation 8 d'une deuxième 5 desdites deux traverses adjacentes, le premier et deuxième plans étant sensiblement perpendiculaire entre eux. La troisième perforation est orientée selon une direction qui s'étend à travers le deuxième flanc des traverses. Ainsi la troisième perforation forme un angle, en particulier un angle de 90°, par rapport à la direction selon laquelle les premières et deuxièmes perforations appliquées sur le premier flanc de la traverse s'étendent.

La troisième perforation 13 est positionnée de telle façon à permettre une liaison par l'intermédiaire d'un troisième des éléments de fixation dudit jeu avec une des premières, deuxièmes, quatrièmes ou cinquièmes perforations d'un des modules de l'ensemble disposé contre le mouchoir où la troisième perforation est appliquée. Ceci permet de placer et de fixer deux modules l'un contre de telle façon à ce qu'ils forment un angle de 90° entre eux. Un troisième élément de fixation du jeu des éléments de fixation étant logé dans cette troisième perforation de l'un module et celles des premières, deuxièmes, quatrièmes ou cinquièmes perforations de l'autre module, lorsque les modules sont assemblés. Ainsi il devient possible non seulement de former une charpente qui s'étend dans un même plan, mais également une charpente qui s'étend dans plusieurs plans.

De préférence, lorsque les modules sont placés selon une matrice ils sont tous placés de façon à ce que les mouchoirs se trouvent d'un même côté, sauf pour le ou les modules sur le ou lesquels on viendra fixer un autre module sur leur mouchoir. Ceci permet d'utiliser les mêmes éléments de fixations pour une fixation à l'aide des traverses entre elles ou entre une traverse et un mouchoir. De plus les éléments de fixation appliqués dans ces troisièmes perforations ne gêneront ainsi pas ceux déjà appliqués dans les premières, deuxièmes, quatrièmes et cinquièmes perforations. Grâce à cette disposition de la troisième perforation 13 un élément de fixation qui sera introduit dans cette troisième perforation sera suffisamment distant des éléments de fixation introduits dans les perforations appliquées sur les premiers flancs des traverses.

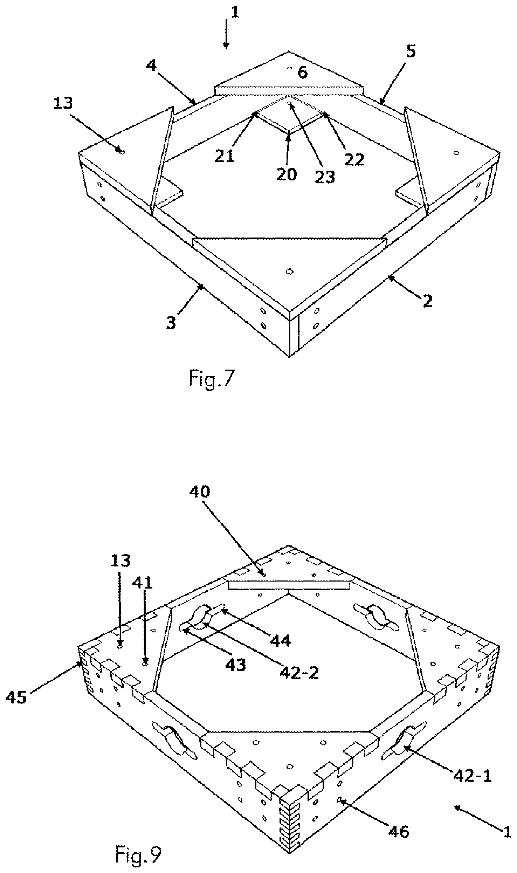

Comme illustré à la figure 9, qui montre une autre forme de réalisation d'un module suivant l'invention, Il est également possible que le mouchoir comporte au moins une sixième perforation 40,41 placée en décalage par rapport à la troisième perforation 6. De préférence les sixièmes perforations sont disposées à une même distance de la troisième perforation et aux angles d'un triangle rectangulaire. La ou les sixièmes perforations servent à monter sur le module d'autres modules qui seront alors en décalage par rapport à ce module. Ceci augmente le nombre de configuration de charpentes à réaliser suivant l'invention.

Dans la forme de réalisation suivant la figure 9 le module comporte également au moins premier trou 42-1 placé sensiblement au centre du premier flanc d'une première traverse et un deuxième trou 42-2 placé sensiblement au centre du premier flanc d'une deuxième traverse située du côté oppose du module. Ces trous traversent leurs traverses respectives. De préférence chaque trou 42 comporte de part et d'autres un canal 43 et 44 qui s'étend à partir du pourtour du trou vers chaque fois une extrémité de la traverse. Ces trous ont plusieurs fonctions dont celles de servir à prendre en main le module, à permettre le passage de câbles ou de tubes, ou encore à y insérer des barres pour rigidifier la charpente.

Dans la forme de réalisation suivant la figure 9 le module comporte également des neuvièmes 45 et dixièmes 46 perforations placées à distance des premières et deuxièmes et ayant des configurations et des fonctions similaires à ces dernières. Ces neuvièmes 45 et dixièmes 46 perforations servent à relier d'autres modules qui peuvent ainsi être montés en décalage par rapport à au module sur lequel ils seront montés. Bien entendu la présence des sixièmes 40, 41, neuvièmes 45 et dixièmes 46 perforations et celle des trous 42 sont indépendantes l'une de l'autre et peuvent tant ensemble que séparément être appliqués sur les autres formes de réalisation décrites dans ce document.

Dans la forme de réalisation suivant la figure 9 les mouchoirs sont placés dans l'enceinte formée par le module et leur surface est donc à même hauteur que celle des deuxièmes flancs des traverses. Bien entendu cette disposition des mouchoirs peut aussi s'appliquer à la forme de réalisation du module illustré à la figure 1.

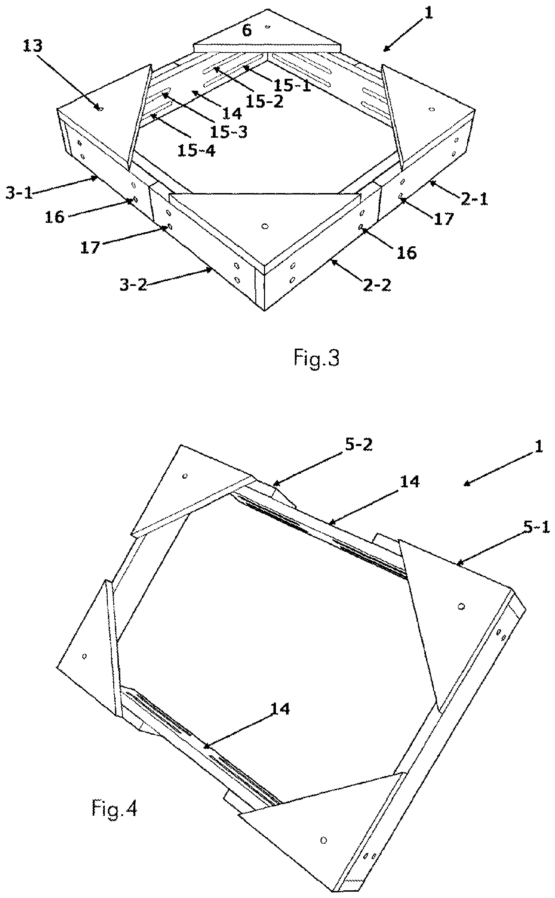

Les figures 3 et 4 montrent une vue d'ensemble d'une deuxième forme de réalisation d'un module d'un ensemble suivant l'invention. Cette forme de réalisation se distingue de celle illustrée à la figure 1 par le fait qu'au moins deux des traverses 2, 3, 4 et 5 sont chacune formées d'au moins deux segments 2-1 et 2-2, 3-1 et 3-2. Chacun de ces segments est de préférence pourvu d'une septième 16 et d'une huitième 17 perforation similaire aux premières et deuxièmes perforations. Les segments sont reliés entre eux par un organe de liaison 14 agencé pour permettre un déplacement des segments l'un par rapport à l'autre et permettant une extension de la traverse ou une inclinaison des segments entre eux. De préférence cet organe de liaison est formé par une latte appliquée contre un troisième flanc de la traverse et pourvue d'au moins une rainure 15 (-1,-2,-3-,4) dans laquelle un ergot appliqué sur la traverse prend prise. Le troisième flanc de la traverse est situé du côté opposé à celui où est situé le premier flanc. Ainsi les segments peuvent glisser l'un par rapport à l'autre et ils sont guidés dans ce mouvement par l'ergot qui glisse dans la rainure. Le cas échéant, un élément de fixation est introduit dans la septième 16 ou huitième 17 perforation afin de fixer les segments dans leur position étendue. La présence de l'organe de liaison permet ainsi de faire varier la dimension du module, comme illustré à la figure 4, et de construire une charpente qui peut s'adapter aux dimensions de l'endroit où elle sera placée. Dans la forme de réalisation illustrée à la figure 3, l'organe de liaison comporte quatre rainures 15-1, 15-2, 15-3 et 15-4 ce qui a l'avantage de maintenir les segments d'une même traverse bien alignés l'un par rapport à l'autre lorsqu'ils sont écartés l'un de l'autre. Mais il s'agit là bien entendu d'une forme de réalisation préférentielle et il sera clair que l'invention n'est pas limitée à cette forme de réalisation. Dans d'autres formes de réalisation il peut être envisagé de n'avoir qu'une seule rainure. Le fait que les rainures ne s'étendent pas sur l'ensemble de la longueur de l'organe de liaison a comme avantage de rigidifier cet organe de liaison.

La figure 5 montre la deuxième forme de réalisation du module de l'ensemble avec des accessoires qui y sont attachés. Ces accessoires, comme par exemple une pièce angulaire 18 ou une pièce droite 19, sont montés à l'intérieur du module et s'étendent dans l'enceinte délimitée par le module. Les accessoires sont fixés à l'organe de liaison soit par collage, vissage ou à l'aide de clous. Ils permettent d'y fixer une finition.

La figure 7 montre une vue d'ensemble d'un module pourvu d'une plaquette d'attache 20. La plaquette d'attache est agencée pour être fixée à un mouchoir 6 et pour s'étendre du côté opposé auquel le mouchoir est appliqué. La fixation de la plaquette d'attache au mouchoir est par exemple réalisée à l'aide d'une tige au moins partiellement filetée et qui traverse la troisième perforation 13 prévue sur le mouchoir et une onzième perforation 23 prévue sur la plaquette d'attache. La onzième perforation est disposée de telle façon à être alignée à la troisième perforation lorsque la plaquette d'attache est placée sur le module. Cette plaquette d'attache sert à y fixer une finition. Puisque la plaquette d'attache est fixée au mouchoir elle peut facilement être montée et démontée du module sans devoir intervenir sur d'autres composants du module laissant ainsi la structure du module intacte. Comme c'est la plaquette d'attache qui porte la finition, cette dernière est montée et démontée avec la même facilité que la plaquette d'attache.

La plaquette d'attache comporte sur deux de ses côtés un profil 21, 22 en escalier. Ceci a comme avantage de laisser de l'espace libre pour les éléments de fixation qui seraient appliqués dans les perforations de la traverse. Le profil en escalier permet ainsi que les éléments de fixation ne gênent pas le montage de la plaquette d'attache.

De préférence, la troisième 13 et la onzième 23 perforations comportent un évidement agencé pour y loger la tête d'un boulon qui fait partie de l'élément de fixation. Ainsi la tête de boulon ne forme pas une protubérance par rapport au plan du mouchoir ou de la plaquette d'attache, laquelle protubérance pourrait perturber l'application d'une finition.

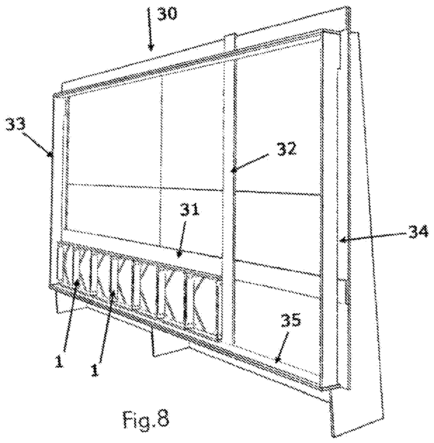

La figure 8 illustre un dispositif d'assemblage des modules de l'ensemble suivant l'invention. Le dispositif 30 comporte un bâti 33 pourvu d'une barre horizontale 31 et d'une barre verticale 32 chacune montée de façon à glisser dans le bâti. A cette fin le bâti est pourvu d'une première glissière 34 et d'une deuxième glissière 35. Pour relier les modules entre eux on juxtaposera une série de modules 1. Ensuite on fera glisser les barres horizontales et verticales contre les modules juxtaposés ce qui aura pour effet de correctement les aligner. Il suffira ensuite de relier les modules entre eux à l'aide des éléments de fixation pour former la charpente .

Les modules sont de préférence fabriqués en bois, de préférence du peuplier, traité pour être ignifuge. Les modules peuvent bien entendu être fabriqués en d'autres matière que du bois, comme par exemple en aluminium ou en matière plastique.

Les modules suivant l'invention permettent de construire de façon rapide et très flexible une charpente, qui à son tour peut servir à diverses applications comme par exemple former une cloison, une armoire, une étagère, un podium, un support pour un décor, un escalier, un banc, etc. Etant entendu que les modules peuvent facilement être reliés entre eux à l'aide des éléments de fixations placés dans les perforations et que les modules peuvent être associés sous de multiples configurations, tant dans un même plan que sous des plans formant un angle entre eux, des charpentes de différentes configurations peuvent être formées sans faire appel à des techniques complexes.

## Revendications

1. Ensemble de modules (1) d'une charpente, chaque module comprenant au moins trois traverses (2,3,4,5) reliées entre elles de façon à former un sous-ensemble de la charpente, chaque traverse comprenant un premier (2a,3a) et un deuxième (2b,3b) flanc formant un angle entre eux, ledit ensemble comportant un jeu d'éléments de fixation agencés pour relier les modules entre eux, chaque module comprenant également au moins deux mouchoirs (6) chacun placé sur deux traverses adjacentes à hauteur d'une jonction entre ces deux traverses adjacentes, chaque traverse étant pourvue d'au moins une première (7) et une deuxième (8) perforation situées sur le premier flanc et disposées respectivement au voisinage d'une première (11) et d'une deuxième (12) extrémité de la traverse, lesdits mouchoirs étant chaque fois pourvus d'une troisième perforation (13), **caractérisé en ce que** les mouchoirs s'étendent sensiblement en parallèle au deuxième flanc des traverses, la troisième perforation étant orientée selon une direction qui s'étend à travers le deuxième flanc, un premier des éléments de fixation dudit jeu étant logés dans les premières perforations et un deuxième des éléments de fixation dudit jeu étant logé dans les deuxièmes perforations de deux modules adjacents lorsqu'ils sont assemblés avec les premières faces d'une des traverses de chacun des deux modules côte à côte, lesquels éléments de fixation sont agencés pour permettre d'établir la liaison entre les deux modules adjacents lorsque cette liaison est établie entre eux.

2. Ensemble suivant la revendication 1, **caractérisé en ce que** la troisième perforation est positionnée de telle façon à permettre une liaison par l'intermédiaire d' un troisième des éléments de fixation dudit jeu avec une des premières ou deuxièmes perforations d'un des modules de l'ensemble disposé contre le mouchoir où la troisième perforation est appliquée, le troisième élément de fixation étant logé dans cette troisième perforation et la première ou deuxième perforation lorsque les modules sont assemblés.

3. Ensemble suivant la revendication 1 ou 2, **caractérisé en ce que** la troisième perforation est disposée sur un croissement (I) d'un premier (PL1) et d'un deuxième (PL2) plan s'étendant respectivement à travers la première perforation (7) d'une première desdites deux traverses adjacentes et à travers la deuxième perforation (8) d'une deuxième desdites deux traverses adjacentes, le premier et deuxième plans étant sensiblement perpendiculaire entre eux.

4. Ensemble suivant l'une des revendications 1 à 3, **caractérisé en ce que** chaque traverse est pourvue sur son premier flanc d'au moins une quatrième (9) et une cinquième (10) perforation disposées respectivement au voisinage de la première (11) et de la deuxième (12) extrémités de la traverse et s'étendant dans un premier et un deuxième plans s'étendant sensiblement de façon perpendiculaire à travers la première et la deuxième perforations.

5. Ensemble suivant l'une des revendications 1 à 4, **caractérisé en ce que** le mouchoir comporte au moins une sixième perforation placée en décalage par rapport à la troisième perforation.

6. Ensemble suivant l'une des revendications 1 à 5, **caractérisé en ce qu'**au moins deux des au moins trois traverses sont chacune formées d'au moins deux segments (2-1,2-2 ; 3-1,3-2) reliés entre eux par un organe de liaison (14) agencé pour permettre un déplacement des segments l'un par rapport à l'autre et permettant une extension de la traverse.

7. Ensemble suivant la revendication 6, **caractérisé en ce que** l'organe de liaison (14) est formé par une latte appliquée contre la traverse et pourvue d'au moins une rainure (15) dans laquelle un ergot appliqué sur une troisième face de la traverse prend prise.

8. Ensemble suivant l'une des revendications 1 à 7, **caractérisé en ce qu'**il comporte au moins une plaquette d'attache (20) agencée pour être fixée à un mouchoir (6) et pour s'étendre du côté opposé auquel le mouchoir est appliqué.

9. Ensemble suivant la revendication 8, **caractérisé en ce que** la plaquette d'attache comporte une onzième perforation (23) disposée de telle façon à être alignée à la troisième perforation lorsque la plaquette d'attache est placée sur le module.

10. Ensemble suivant les revendications 8 ou 9, **caractérisé en ce que** la plaquette d'attache comporte sur deux de ses côtés un profil (21,22) en escalier.

11. Ensemble suivant l'une des revendications 1 à 10, **caractérisé en ce que** la troisième perforation comporte un évidement agencé pour y loger la tête d'un boulon.

12. Ensemble suivant l'une des revendications 1 à 11, **caractérisé en ce qu'**au moins deux traverses situées à des côtés opposés du module comportent un trou (42) traversant la traverse sur laquelle il est appliqués.

13. Dispositif d'assemblage d'un ensemble de modules suivant l'une des revendications 1 à 12, **caractérisé en ce qu'**il comporte un ensemble de modules suivant l'une des revendications 1 à 12 et un bâti (33) pourvu d'une barre horizontale (31) et d'une barre verticale (32) montées de façon à glisser dans le bâti contre les modules montés dans le bâti.

## Patentansprüche

1. Moduleinheit (1) eines Traggerüsts, wobei jedes Modul mindestens drei Traversen (2, 3, 4, 5) umfasst, die miteinander verbunden sind, sodass sie eine Untereinheit des Traggerüsts bilden, wobei jede Traverse eine erste (2a, 3a) und eine zweite (2b, 3b) Flanke umfasst, die zwischen sich einen Winkel bilden, wobei die Einheit einen Satz von Befestigungselementen umfasst, die dafür ausgebildet sind, die Module miteinander zu verbinden, wobei jedes Modul ebenfalls mindestens zwei Dreieckteile (6) umfasst, die jedes auf zwei aneinandergrenzenden Traversen auf Höhe einer Stoßstelle zwischen diesen zwei aneinandergrenzenden Traversen platziert sind, wobei jede Traverse mit mindestens einer ersten (7) und einer zweiten (8) Bohrung versehen ist, die an der ersten Flanke liegen und jeweils in der Nachbarschaft eines ersten (11) und eines zweiten (12) Endes der Traverse angeordnet sind, wobei die Dreieckteile jedes Mal mit einer dritten Bohrung (13) versehen sind, **dadurch gekennzeichnet, dass** sich die Dreieckteile im Wesentlichen parallel zur zweiten Flanke der Traversen erstrecken, wobei die dritte Bohrung entlang einer Richtung ausgerichtet ist, die sich durch die zweite Flanke hindurch erstreckt, wobei ein erstes der Befestigungselemente des Satzes in den ersten Bohrungen untergebracht werden, und ein zweites der Befestigungselemente des Satzes in den zweiten Bohrungen von zwei aneinandergrenzenden Modulen untergebracht werden, wenn dieselben mit den ersten Flächen einer der Traversen jedes der zwei Module Seite an Seite zusammengefügt werden, welche Befestigungselemente dafür ausgebildet sind, das Herstellen der Verbindung zwischen den zwei aneinandergrenzenden Modulen zu ermöglichen, wenn diese Verbindung zwischen denselben hergestellt wird.

2. Einheit nach Anspruch 1, **dadurch gekennzeichnet, dass** die dritte Bohrung derart positioniert ist, dass sie eine Verbindung mittels eines dritten der Befestigungselemente des Satzes mit einer der ersten oder zweiten Bohrungen eines der Module der Einheit ermöglicht, das gegen das Dreieckteil angeordnet wird, an dem die dritte Bohrung angebracht ist, wobei das dritte Befestigungselement in dieser dritten Bohrung und der ersten oder zweiten Bohrung untergebracht wird, wenn die Module zusammengefügt werden.

3. Einheit nach Anspruch 1 oder 2, **dadurch gekennzeichnet, dass** die dritte Bohrung an einer Kreuzung (I) einer ersten (PL1) und einer zweiten (PL2) Ebene angeordnet ist, die sich jeweils durch die erste Bohrung (7) einer ersten der zwei aneinandergrenzenden Traversen, und durch die zweite Bohrung (8) einer zweiten der zwei aneinandergrenzenden Traversen hindurch erstrecken, wobei die erste und zweite Ebene im Wesentlichen senkrecht zueinander sind.

4. Einheit nach einem der Ansprüche 1 bis 3, **dadurch gekennzeichnet, dass** jede Traverse an ihrer ersten Flanke mit mindestens einer vierten (9) und einer fünften (10) Bohrung versehen ist, die jeweils in der Nachbarschaft des ersten (11) und des zweiten (12) Endes der Traverse angeordnet sind und sich in einer ersten und einer zweiten Ebene erstrecken, die sich im Wesentlichen senkrechterweise durch die erste und die zweite Bohrung hindurch erstrecken.

5. Einheit nach einem der Ansprüche 1 bis 4, **dadurch gekennzeichnet, dass** das Dreieckteil mindestens eine sechste Bohrung umfasst, die in Bezug auf die dritte Bohrung versetzt platziert ist.

6. Einheit nach einem der Ansprüche 1 bis 5, **dadurch gekennzeichnet, dass** mindestens zwei der mindestens drei Traversen jede von mindestens zwei Segmenten (2-1, 2-2; 3-1, 3-2) gebildet werden, die über ein Verbindungsglied (14) miteinander verbunden sind, welches dafür ausgebildet ist, ein Verschieben der Segmente in Bezug zueinander zu ermöglichen, und die ein Verlängern der Traverse ermöglicht.

7. Einheit nach Anspruch 6, **dadurch gekennzeichnet, dass** das Verbindungsglied (14) von einer Latte gebildet wird, die gegen die Traverse angebracht ist und mit mindestens einer Nut (15) versehen ist, in die ein Zapfen, der an einer dritten Fläche der Traverse angebracht ist, eingreift.

8. Einheit nach einem der Ansprüche 1 bis 7, **dadurch gekennzeichnet, dass** sie mindestens eine Halteplatte (20) umfasst, die dafür ausgebildet ist, an einem Dreieckteil (6) befestigt zu werden, und dafür, sich auf der Seite zu erstrecken, die derjenigen, auf der das Dreieckteil angebracht ist, gegenüberliegt.

9. Einheit nach Anspruch 8, **dadurch gekennzeichnet, dass** die Halteplatte eine elfte Bohrung (23) umfasst, die derart angeordnet ist, dass sie zur dritten Bohrung ausgerichtet ist, wenn die Halteplatte am Modul platziert wird.

10. Einheit nach den Ansprüchen 8 oder 9, **dadurch gekennzeichnet, dass** die Halteplatte auf zwei ihrer Seiten ein Treppenprofil (21, 22) umfasst.

11. Einheit nach einem der Ansprüche 1 bis 10, **dadurch gekennzeichnet, dass** die dritte Bohrung eine Aussparung umfasst, die dafür ausgebildet ist, darin den Kopf eines Bolzens unterzubringen.

12. Einheit nach einem der Ansprüche 1 bis 11, **dadurch gekennzeichnet, dass** mindestens zwei Traversen, die auf gegenüberliegenden Seiten des Moduls liegen, ein Loch (42) umfassen, das durch die Traverse, an der es angebracht ist, hindurchgeht.

13. Vorrichtung zum Zusammenfügen einer Moduleinheit nach einem der Ansprüche 1 bis 12, **dadurch gekennzeichnet, dass** sie eine Moduleinheit nach einem der Ansprüche 1 bis 12 und ein Gestell (33) umfasst, das mit einer horizontalen Leiste (31) und mit einer vertikalen Leiste (32) versehen ist, die so montiert sind, dass sie sich im Gestell gegen die im Gestell montierten Module verschieben.

## Claims

1. A kit of modules (1) of a framework, each module comprising at least three struts (2,3,4,5) connected among each other in such a manner as to form a sub-kit of the framework, each strut comprising a first (2a,3a) and a second (2b,3b) side forming an angle among each other, said kit comprising a set of fixing elements provided for connecting the modules among each other, each module also comprising at least two gussets (6) each placed on two adjacent struts at a height of a junction between those two adjacent struts, each strut being provided with at least a first (7) and a second (8) perforation situated on the first side and applied respectively in the neighborhood of a first (11) and a second (12) end of the strut, said gussets being each time provided with a third perforation (13), **characterized in that** the gussets extend essentially in parallel with the second side of the struts, the third perforation being oriented according to a direction which extend across the second side, a first of the fixing elements of said set being housed in the first perforations and a second of the fixing elements of said set being housed in the second perforations of two adjacent modules when they are assembled side by side with the first sides of one of the struts of each of the two modules, which fixing elements being provided for enabling to establish the connection between two adjacent modules when said connection is established among them.

2. The kit according to claim 1, **characterized in that** the third perforation is positioned in such a manner as to enable a connection by means of a third fixing element of said set with one of the first or second perforation of one of the modules of the kit applied against the gusset where the third perforation is applied, the third fixing element being housed in said third perforation and the first or second perforation when the modules are assembled.

3. The kit according to claim 1 or 2, **characterized in that** the third perforation is applied on a crossing (I) of a first (PL1) and a second (PL2) plane extending respectively across the first perforation (7) of a first of said two adjacent struts and across the second perforation (8) of a second of said adjacent struts, the first and second planes being essentially perpendicular among them.

4. The kit according to anyone of the claims 1 to 3, **characterized in that** each strut is provided on its first side with at least a fourth (9) and a fifth (10) perforation applied respectively in the neighborhood of the first (11) and the second (12) end of the strut and extending in a first and a second plane extending essentially in a perpendicular manner across the first and second perforation.

5. The kit according to anyone of the claims 1 to 4, **characterized in that** the gusset comprises at least a sixth perforation placed offset with respect to the third perforation.

6. The kit according to anyone of the claims 1 to 5, **characterized in that** at least two of said at least three struts are each formed by at least two segments (2-1,2-2;3-1,3-2) connected among each other by a connection member (14) provided for enabling a displacement of the segments with respect to each other and enabling an extension of the strut.

7. The kit according to claim 6, **characterized in that** the connection member (14) is formed by a lath applied against the strut and provided with at least one groove (15) in which a lug applied on a third side of the strut grips.

8. The kit according to anyone of the claims 1 to 7, **characterized in that** it comprises at least one fixing plate (20) provided for being fixed to a gusset (6) and for extending at the opposite side at which the gusset is applied.

9. The kit according to claim 8, characterized the fixing plate comprises an eleventh (23) perforation (23) applied in such a manner to be aligned to the third perforation when the fixing plate is placed on the module.

10. The kit according to claim 8 or 9, **characterized in that** the fixing plate comprises on two of its sides a staircase profile (21,22).

11. The kit according to anyone of the claims 1 to 10, **characterized in that** the third perforation comprises a hollow out provided for housing therein a head of a bolt.

12. The kit according to anyone of the claims 1 to 11, **characterized in that** at least two struts situated at opposite sides of the module comprises a hole (42) crossing the strut on which it is applied.

13. A device for assembling a kit of modules according to anyone of the claims 1 to 12, **characterized in that** it comprises a kit of modules according to anyone of the claims 1 to 12 and a support (33) provided with a horizontal bar (31) and a vertical bar (32) mounted in such a manner as to slide inside the support against the modules mounted inside the support.
